# EUROPÄISCHE PATENTANMELDUNG

(11) **EP 4 406 778 A1**
(43) Veröffentlichungstag der Anmeldung: **31.07.2024**
(21) Anmeldenummer: 23205078.1
(22) Anmeldetag: 23.10.2023
(51) Int. Cl.: B60L 53/302, H01H 1/62, H01H 9/52, H02B 1/56, H05K 7/20

(54) **SAMMELSCHIENE, STROMABNEHMEREINRICHTUNG, ELEKTRISCHES VERSORGUNGSSYSTEM UND LUFTFAHRZEUG**

(30) Priorität: 27.01.2023 DE 102023200689
(71) Anmelder: Airbus Operations GmbH, 21129 Hamburg (DE)
(72) Erfinder: BENTHIEN, Hermann, 21129 Hamburg (DE); HEGENBART, Matthias, 21129 Hamburg (DE)
(74) Vertreter: Isarpatent

(57) **Zusammenfassung**

Die vorliegende Erfindung schafft eine Sammelschiene mit einer Vielzahl an Leiterschienen; und einem Gehäuse, welches einen Innenraum umschließt; wobei die Vielzahl an Leiterschienen in dem Innenraum angeordnet ist und jeweils mindestens einen Hohlraum aufweisen, durch welchen ein Kühlmittel geführt werden kann. Des Weiteren schafft die vorliegende Erfindung eine Stromabnehmereinrichtung (200) mit einem Gehäuse (210); einem elektrischen Schaltkreis (220), welcher in dem Gehäuse (210) angeordnet und dazu ausgebildet ist, elektrische Energie von einer Sammelschiene (100) zu empfangen und an mindestens ein Verbrauchsgerät auszugeben; und mindestens eine Wärmetransporteinrichtung (230) mit mindestens einem Hohlraum (231), durch welchen ein Kühlmittel geführt werden kann. Des Weiteren schafft die vorliegende Erfindung ein elektrisches Versorgungssystem sowie ein Luftfahrzeug.

## Beschreibung

### TECHNISCHES GEBIET DER ERFINDUNG

Die vorliegende Erfindung betrifft eine Sammelschiene, eine Stromabnehmereinrichtung, ein elektrisches Versorgungssystem, sowie ein Luftfahrzeug.

### HINTERGRUND DER ERFINDUNG

In Luftfahrzeugen findet sich eine Vielzahl an elektronischen Komponenten, welche zum einen mit Energie als auch mit Steuersignalen versorgt werden müssen. Hierfür können neben Kabeln auch Sammelschienen verwendet werden.

Aufgrund elektrischer Widerstände erwärmen sich sowohl die Kabel als auch die Sammelschienen, wenn elektrischer Strom durch sie hindurch fließt. Diese Erwärmung kann lokalisiert zu hohen Temperaturen führen, wodurch sichergestellt werden muss, dass durch diese Temperaturen keine Bauteile in der Nähe der elektrischen Leiter benachteiligt werden.

### ZUSAMMENFASSUNG DER ERFINDUNG

Vor diesem Hintergrund liegt der vorliegenden Erfindung die Aufgabe zu Grunde, eine unerwünschte Erwärmung von elektrischen Versorgungssystemen zu vermeiden.

Diese Aufgabe wird gelöst durch eine Sammelschiene mit den Merkmalen des Patentanspruchs 1, eine Stromabnehmereinrichtung mit den Merkmalen des Patentanspruchs 3, ein elektrisches Versorgungssystem mit den Merkmalen des Patentanspruchs 9 sowie durch ein Luftfahrzeug mit den Merkmalen des Patentanspruchs 10.

Dementsprechend ist nach einem ersten Aspekt der Erfindung eine Sammelschiene mit einer Vielzahl an Leiterschienen und einem Gehäuse, welches einen Innenraum umschließt vorgesehen. Die Vielzahl an Leiterschienen ist in dem Innenraum angeordnet und weisen jeweils mindestens einen Hohlraum auf, durch welchen ein Kühlmittel geführt werden kann.

Nach einem weiteren Aspekt der Erfindung ist eine Stromabnehmereinrichtung mit einem Gehäuse, einem elektrischen Schaltkreis, welcher in dem Gehäuse angeordnet und dazu ausgebildet ist, elektrische Energie von einer Sammelschiene zu empfangen und an mindestens ein Verbrauchsgerät auszugeben und mindestens eine Wärmetransporteinrichtung mit mindestens einem Hohlraum, durch welchen ein Kühlmittel geführt werden kann, vorgesehen.

Nach einem weiteren Aspekt der Erfindung ist ein elektrisches Versorgungssystem mit einer erfindungsgemäßen Sammelschiene und/oder einer erfindungsgemäßen Stromabnehmereinrichtung vorgesehen.

Nach einem weiteren Aspekt der Erfindung ist ein Luftfahrzeug mit einer erfindungsgemäßen Sammelschiene, einer erfindungsgemäßen Stromabnehmereinrichtung und/oder einem erfindungsgemäßen elektrisches Versorgungssystem vorgesehen.

Eine Idee der vorliegenden Erfindung besteht darin, eine aktive Kühlung möglichst direkt innerhalb der sich erwärmenden elektrischen Bauteile. Hierdurch kann die entstehende Wärme direkt an der Quelle abgegriffen und einer angemessenen Weiterverteilung zugeführt werden, wodurch sichergestellt werden kann, dass eine gewünschte Betriebstemperatur der einzelnen Komponenten eingehalten wird. Als weiterer Vorteil ergibt sich, dass die einzelnen Bauteile zum Teil kompakter ausgebildet werden können, da eine andernfalls unerwünschte Erhitzung von dicht aneinander liegenden Komponenten vermieden werden kann.

Nach einer Weiterbildung umfasst die Sammelschiene weiterhin eine Kühleinrichtung, welche dazu ausgebildet ist, den Innenraum, insbesondere die Vielzahl an Leiterschienen, zu kühlen. Hierdurch wird der Kühleffekt vorteilhaft erhöht.

Nach einer Weiterbildung der Stromabnehmereinrichtung ist die mindestens eine Wärmetransporteinrichtung mit dem Gehäuse verbunden oder bildet einen Teil des Gehäuses. An dem Gehäuse kann die im Inneren entstehende Wärme vorteilhaft an die Umgebung bzw. weitere Kühlmethoden abgegeben werden.

Nach einer Weiterbildung der Stromabnehmereinrichtung ist die mindestens eine Wärmetransporteinrichtung als Teil einer Befestigungseinrichtung ausgebildet, auf welcher der elektrische Schaltkreis angeordnet ist. Durch direkten Kontakt der Wärmetransporteinrichtung mit dem elektrischen Schaltkreis, kann die in dem Schaltkreis entstehende Wärme besonders vorteilhaft abgeleitet werden.

Nach einer Weiterbildung der Stromabnehmereinrichtung ist die mindestens eine Wärmetransporteinrichtung als Teil des elektrischen Schaltkreises ausgebildet. Da in dem elektrischen Schaltkreis besonders viel Wärme entsteht, ist der direkte Wärmeabtransport von dem elektrischen Schaltkreis weg besonders vorteilhaft.

Nach einer Weiterbildung der Stromabnehmereinrichtung weist die Wärmetransporteinrichtung einen elektrischen Leiter auf. Insbesondere kann der mindestens eine Hohlraum innerhalb des elektrischen Leiters angeordnet sein. Hierdurch kann die Wärmetransporteinrichtung besonders effizient in den elektrischen Schaltkreis integriert werden.

Nach einer Weiterbildung kann die Stromabnehmereinrichtung weiterhin eine Kühleinrichtung aufweisen, welche dazu ausgebildet ist, die Stromabnehmereinrichtung, insbesondere die mindestens eine Wärmetransporteinrichtung, insbesondere das durch den mindestens einen Hohlraum geführte Kühlmittel, zu kühlen. Hierdurch wird der Kühleffekt vorteilhaft erhöht.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: eine schematische Darstellung eines Luftfahrzeugs gemäß eines Ausführungsbeispiels der vorliegenden Erfindung;
- Fig. 2: eine schematische Seitenansicht eines elektrischen Versorgungssystems gemäß eines Ausführungsbeispiels der vorliegenden Erfindung;
- Fig. 3: eine schematische Querschnittsansicht einer Sammelschiene gemäß eines Ausführungsbeispiels der vorliegenden Erfindung;
- Fig. 4: eine schematische Querschnittansicht einer Stromabnehmereinrichtung gemäß eines Ausführungsbeispiels der vorliegenden Erfindung; und
- Fig. 5: eine schematische Querschnittansicht einer Stromabnehmereinrichtung gemäß eines Ausführungsbeispiels der vorliegenden Erfindung.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

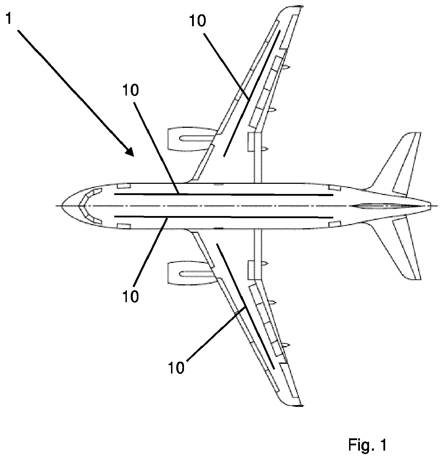

Fig. 1 zeigt eine schematische Darstellung eines Luftfahrzeugs 1 gemäß eines Ausführungsbeispiels der vorliegenden Erfindung.

Das in Figur 1 gezeigte Luftfahrzeug 1 weist eine Vielzahl von elektrischen Versorgungssystemen 10 auf, von denen insgesamt vier gezeigt sind. Zwei elektrische Versorgungssysteme 10 verlaufen hierbei entlang des Rumpfes des Luftfahrzeugs 1 und jeweils ein elektrisches Versorgungssystem 10 verläuft längs jedes der Flügel des Luftfahrzeugs 1.

Die Positionen der in Figur 1 gezeigten elektrischen Versorgungssysteme 10 deuten an, an welchen Stellen in einem Luftfahrzeug beispielsweise elektrische Leitungen angeordnet sein können. An diesen Stellen können also auch erfindungsgemäße elektrische Versorgungssysteme Anwendung finden um die im allgemeinen Teil beschriebenen synergistischen Effekte der vorliegenden Erfindung bestmöglich nutzen zu können.

Bei dem in Figur 1 gezeigten Luftfahrzeug sind elektrische Versorgungssysteme 10 genannt. Es ist allerdings auch denkbar, dass ein Luftfahrzeug 1 lediglich erfindungsgemäße Sammelschienen aufweist, falls etwa durch das Hinzufügen von Stromabnehmereinrichtungen, die Bauteile erst nachträglich zu elektrischen Versorgungssystemen ergänzt werden sollen. Es ist auch denkbar, ein Luftfahrzeug 1 zunächst mit Stromabnehmereinrichtungen 200 ausgestattet werden, welche dann mit entsprechenden Sammelschienen ergänzt werden.

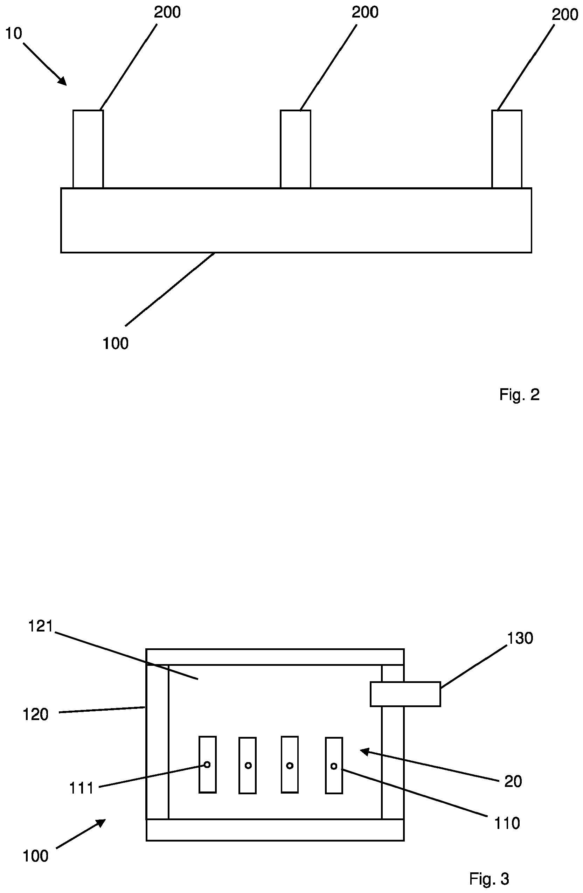

Fig. 2 zeigt eine schematische Seitenansicht eines elektrischen Versorgungssystems 10 gemäß eines Ausführungsbeispiels der vorliegenden Erfindung.

Das elektrische Versorgungssystem 10 weist eine Sammelschiene 100 und eine Vielzahl an Stromabnehmereinrichtungen 200 auf. In dem hier gezeigten Ausführungsbeispiel sind insgesamt drei Stromabnehmereinrichtungen 200 vorgesehen, zwei Stromabnehmereinrichtungen 200 jeweils an den Enden der Sammelschiene 100 und eine Stromabnehmereinrichtung 200 an einer zentralen Stelle.

In Fig. 2 wird nicht explizit gezeigt, wie die Stromabnehmereinrichtungen 200 mit der Sammelschiene 100 verbunden sind, da es hierfür eine große Vielzahl an Möglichkeiten gibt. So können etwa Schrauben, Nieten oder Klebmittel für die Befestigung verwendet werden. Auch sind Steckverbindungen denkbar.

Die genaueren Ausgestaltungen der Sammelschiene 100 bzw. der Stromabnehmereinrichtungen 200 werden mit Bezug auf die weiteren Figuren erläutert.

Fig. 3 zeigt eine schematische Querschnittsansicht einer Sammelschiene 100 gemäß eines Ausführungsbeispiels der vorliegenden Erfindung.

Die Sammelschiene 100 weist eine Vielzahl an Leiterschienen 110, ein Gehäuse 120, sowie eine Kühleinrichtung 130 auf. Das Gehäuse 120 umschließt in dem gezeigten Ausführungsbeispiel einen abgeschlossenen Innenraum 121, in welchem die Vielzahl an Leiterschienen 110 angeordnet sind. Die Vielzahl an Leiterschienen 110 umfassen im vorliegenden Ausführungsbeispiel jeweils einen Hohlraum 111.

Durch den jeweils einen Hohlraum 111 kann ein Kühlmittel geführt werden, welches die bei Betrieb der Sammelschiene 100 entstehende Wärme abtransportieren kann. Hierdurch wird die Vielzahl an Leiterschienen 100 auf einer angemessenen Betriebstemperatur gehalten. In Fig. 3 weist jede Leiterschiene 100 einen Hohlraum 111 auf. Es können auch andere Anzahlen an Hohlräumen 111 vorgesehen werden. Auf diese Weise kann das Verhältnis von Leitermaterial zu Kühlmittel besonders vorteilhaft angepasst werden.

Die in Fig. 3 gezeigten Hohlräume 111 verlaufen in Längsrichtung entlang der jeweiligen Leiterschiene 110. Hierdurch werden die jeweiligen Leiterschienen 110 entlang ihrer gesamten Länge gleichmäßig gekühlt. Zusätzlich oder alternativ können Hohlräume 111 auch an geeigneten Stellen in Querrichtung zur jeweiligen Leiterschiene 110 angeordnet werden. Hierdurch können an Stellen, an welchen eine Kühlung besonders vorteilhaft sein kann, vorteilhaft effiziente Kühlkreisläufe etabliert werden.

Aus Fig. 3 ist nicht ersichtlich, auf welche Weise das Kühlmittel im Detail durch die Hohlräume 111 geführt wird. Es ist vorstellbar, dass das Kühlmittel in einem geschlossenen Kreislauf geführt wird, vorteilhafter Weise mit einer Kühleinrichtung 130 wie nachfolgend beschrieben. Auch ein offener Kreislauf, womit gemeint ist, dass Kühlmittel kontinuierlich entnommen und neues Kühlmittel wieder zugeführt wird, ist jedoch denkbar.

Die Kühleinrichtung 130 ist an einer Seite der Sammelschiene 100 angeordnet. In Fig. 3 ist nicht gezeigt, an welcher Stelle entlang der Längsrichtung der Sammelschiene 100 die Kühleinrichtung 130 angeordnet ist. Generell ist es vorteilhaft, die Kühleinrichtung 130 an einer Stelle anzuordnen, an welcher etwa eine Stromabnehmereinrichtung angeordnet werden soll, da an einer derartigen Stelle eine besondere Erhitzung der Sammelschiene 100 bzw. des die Sammelschiene 100 umfassenden elektrischen Versorgungssystems auftreten kann. Alternativ oder zusätzlich kann eine Kühleinrichtung 130 auch an einem Ende der Sammelschiene 100 angeordnet werden. An dieser Stelle kann etwa das durch die mindestens einen Hohlräume 111 transportierte Kühlmittel aus der Sammelschiene 100 heraus geleitet werden, wodurch eine Kühlung des Kühlmittels, und dadurch zumindest indirekt der Vielzahl an Leiterschienen 100, vorteilhaft effizient gestaltet werden kann.

Generell können die Leiterschienen einer Sammelschiene innerhalb des Gehäuses in einem Isolatormaterial eingebettet sein, insbesondere wenn das Gehäuse selbst zumindest teilweise aus einem leitenden Material gefertigt ist oder ein solches beinhaltet. Lediglich aus Gründen der Übersichtlichkeit ist in den Figuren kein solches Isolatormaterial abgebildet.

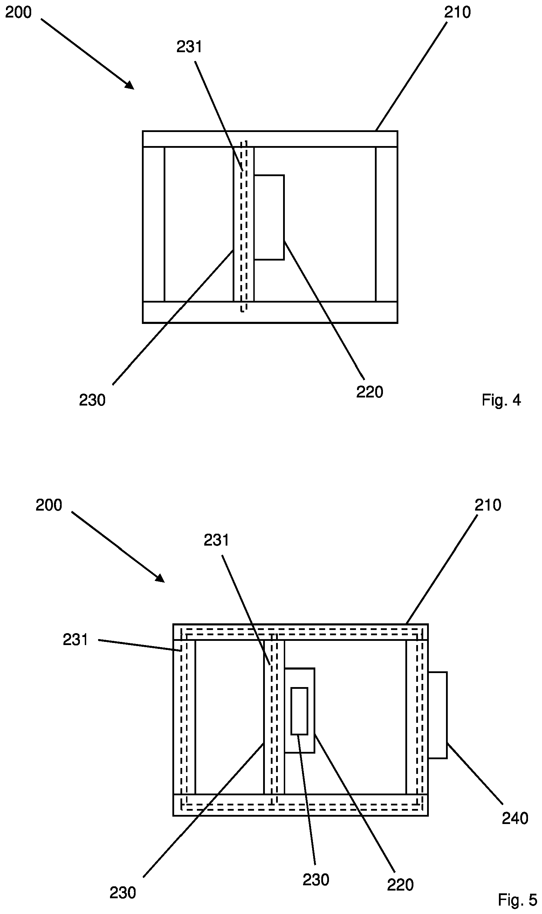

Fig. 4 zeigt eine schematische Querschnittansicht einer Stromabnehmereinrichtung 200 gemäß eines Ausführungsbeispiels der vorliegenden Erfindung.

Die Stromabnehmereinrichtung 200 weist ein Gehäuse 210, einen elektrischen Schaltkreis 220 sowie eine Wärmetransporteinrichtung 230 auf. Die Wärmetransporteinrichtung 230 weist einen Hohlraum 231 auf, welcher durch gestrichelte Linien angedeutet wird.

Durch den Hohlraum 231 kann ein Kühlmittel geführt werden, mit welchem bei Betrieb der Stromabnehmereinrichtung 200 entstehende Wärme abtransportiert werden kann. Insbesondere in dem elektrischen Schaltkreis 220 entsteht bei Betrieb Wärme. In Fig. 4 bildet die Wärmetransporteinrichtung 230 eine Befestigungseinrichtung, auf welcher der elektrische Schaltkreis 220 angeordnet wird. Hierdurch wird mittels des Kühlmittels Wärme vom elektrischen Schaltkreis 220 hin zum Gehäuse 210 geleitet werden. An der Außenfläche des Gehäuses 210 kann die Wärme dann effizienter abgeleitet werden, wie unter anderem mit Bezug auf Fig. 5 nachfolgend erläutert wird. Durch diese Temperaturregulierung des elektrischen Schaltkreises 220 kann dieser kompakter ausgebildet werden, als anders möglich wäre.

Fig. 5 zeigt eine schematische Querschnittansicht einer Stromabnehmereinrichtung 200 gemäß eines Ausführungsbeispiels der vorliegenden Erfindung.

Zusätzlich zu den in Fig. 4 gezeigten Merkmalen weist die in Fig. 5 gezeigte Stromabnehmereinrichtung 200 eine Kühleinrichtung 240 auf. Darüber hinaus weist auch das Gehäuse 210 einen Hohlraum 231 auf und dient demnach zusätzlich als Wärmetransporteinrichtung im Sinne der vorliegenden Anmeldung. Eine weitere Wärmetransporteinrichtung 230 bildet einen Teil des elektrischen Schaltkreises 220.

In dem in Fig. 5 gezeigten Ausführungsbeispiel wird zunächst in dem elektrischen Schaltkreis 220 entstehende Wärme durch die darin angeordnete zusätzliche Wärmetransporteinrichtung 230 zu der als Befestigungseinrichtung ausgebildeten Wärmetransporteinrichtung 230 transportiert. Von hier aus wird die Wärme zu dem durch den Hohlraum 231 des Gehäuses 210 geführten Kühlmittel geleitet. Die an dem Gehäuse 210 angeordnete Kühleinrichtung 240 entnimmt danach Wärme von dem Kühlmittel in geeigneter Weise. Hierdurch wird die in dem elektrischen Schaltkreis 220 entstehende Wärme effizient abgeleitet und die Temperatur des elektrischen Schaltkreises 220 reguliert.

Die jeweiligen Wärmetransporteinrichtungen 230 können unterschiedliche Formen aufweisen, je nach Stelle an welcher die Wärmetransporteinrichtung 230 angeordnet ist. Platten- und Röhrenformen weisen jeweils eigene Vorteile auf. Platten besitzen etwa eine besonders große Ober- bzw. Kontaktfläche, durch welche die Wärmeübertragung von einzelnen Komponenten zu anderen maximiert werden. Röhren können dagegen besonders platzsparend angeordnet werden.

In Fig. 5 sind die Hohlräume 231 als ein zusammenhängendes System dargestellt, welche einen gemeinsamen Kreislauf für Kühlmittel bilden. Es können auch mehrere voneinander abgeschlossene Kreisläufe für Kühlmittel vorgesehen werden, wodurch etwa verschiedene Kühlmittel in verschiedenen Kreisläufen verwendet werden.

In dieser Anmeldung wurde die vorliegende Erfindung im Kontext eines Luftfahrzeuges beschreiben. Die hier beschriebenen Bauteile und Datenübertragungssysteme lassen sich jedoch in allen Bereichen einsetzen. In welchen strukturfestigende Bauteile und Datenübertragungsleitungen vorgesehen werden, insbesondere in allen Arten von Land-, Wasser- und Raumfahrzeugen.

### BEZUGSZEICHENLISTE

- 1: Luftfahrzeug
- 10: Elektrisches Versorgungssystem
- 20: Kühlmedium
- 100: Sammelschiene
- 110: Leiterschiene
- 111: Hohlraum
- 120: Gehäuse
- 121: Innenraum
- 130: Kühleinrichtung
- 200: Stromabnehmereinrichtung
- 210: Gehäuse
- 220: elektrischer Schaltkreis
- 230: Wärmetransporteinrichtung
- 231: Hohlraum
- 240: Kühleinrichtung

## Patentansprüche

1. Sammelschiene (100) mit
einer Vielzahl an Leiterschienen (110); und
einem Gehäuse (120), welches einen Innenraum (121) umschließt;
wobei die Vielzahl an Leiterschienen (110) in dem Innenraum (121) angeordnet ist und jeweils mindestens einen Hohlraum (111) aufweisen, durch welchen ein Kühlmittel geführt werden kann.

2. Sammelschiene (100) nach Anspruch 1, weiterhin umfassend eine Kühleinrichtung (140), welche dazu ausgebildet ist, den Innenraum (121), insbesondere die Vielzahl an Leiterschienen (110), zu kühlen.

3. Stromabnehmereinrichtung (200) mit
einem Gehäuse (210);
einem elektrischen Schaltkreis (220), welcher in dem Gehäuse (210) angeordnet und dazu ausgebildet ist, elektrische Energie von einer Sammelschiene (100) zu empfangen und an mindestens ein Verbrauchsgerät auszugeben; und
mindestens eine Wärmetransporteinrichtung (230) mit mindestens einem Hohlraum (231), durch welchen ein Kühlmittel geführt werden kann.

4. Stromabnehmereinrichtung (200) nach Anspruch 3, wobei die mindestens eine Wärmetransporteinrichtung (230) mit dem Gehäuse (210) verbunden ist oder einen Teil des Gehäuses (210) bildet.

5. Stromabnehmereinrichtung (200) nach einem der Ansprüche 3 oder 4, wobei die mindestens eine Wärmetransporteinrichtung (230) als Teil einer Befestigungseinrichtung ausgebildet ist, auf welcher der elektrische Schaltkreis (220) angeordnet ist.

6. Stromabnehmereinrichtung (200) nach einem der Ansprüche 3 bis 5, wobei die mindestens eine Wärmetransporteinrichtung (230) als Teil des elektrischen Schaltkreises (220) ausgebildet ist.

7. Stromabnehmereinrichtung (200) nach Anspruch 6, wobei die Wärmetransporteinrichtung (230) einen elektrischen Leiter aufweist und insbesondere wobei der mindestens eine Hohlraum (231) innerhalb des elektrischen Leiters angeordnet ist.

8. Stromabnehmereinrichtung (200) nach einem der Ansprüche 3 bis 7, weiterhin aufweisend eine Kühleinrichtung (240), welche dazu ausgebildet ist, die Stromabnehmereinrichtung (200), insbesondere die mindestens eine Wärmetransporteinrichtung (230), insbesondere das durch den mindestens einen Hohlraum (231) geführte Kühlmittel, zu kühlen

9. Elektrisches Versorgungssystem (10) mit mindestens einer Sammelschiene (100) und mindestens einer Stromabnehmereinrichtung (200), wobei die mindestens eine Sammelschiene (100) gemäß einem der Ansprüche 1 oder 2 ausgebildet ist und/oder wobei die mindestens eine Stromabnehmereinrichtung (200) gemäß einem der Ansprüche 3 bis 8 ausgebildet ist.

10. Luftfahrzeug (1) mit mindestens einer Sammelschiene (100) nach einem der Ansprüche 1 oder 2, mindestens einer Stromabnehmereinrichtung (200) nach einem der Ansprüche 3 bis 8, und/oder mindestens einem elektrischen Versorgungssystem (10) nach Anspruch 9.
